# EUROPEAN PATENT SPECIFICATION

(11) **EP 2 031 776 B1**
(45) Date of publication and mention of the grant of the patent: **01.02.2012**
(21) Application number: 07291051.6
(22) Date of filing: 31.08.2007
(51) Int. Cl.: H04B 10/08, H04B 10/18

(54) **Method of operating an optical transmission system and optical transmission system**
Verfahren für den Betrieb eines optischen Übertragungssystems und optisches Übertragungssystem
Procédé pour l'exploitation d'un système de transmission optique et système de transmission optique

(43) Date of publication of application: 04.03.2009
(73) Proprietor: Alcatel Lucent, 75008 Paris (FR)
(72) Inventor: Buchali, Fred, 71336 Waiblingen (DE)
(74) Representative: Schmidt, Werner Karl

(56) References cited:
- EP-A- 1 139 622
- EP-A- 1 755 296
- WO-A-2006/116747
- US-A1- 2002 027 688
- US-A1- 2006 093 379

## Description

The invention relates to a method of operating an optical transmission system, wherein a network element receives data from two or more data sources, wherein a process of electronic dispersion compensation, EDC, is applied to data signals received by said network element from said data sources, and wherein adaptation parameters, which control the process of electronic dispersion compensation, are learned, particularly during processing of said data signals within the network element.

The invention further relates to an optical transmission system according to the preamble of claim 14.

Methods and systems of the aforementioned kind are per se known. For instance, optical access networks are known which comprise an optical line termination (OLT) device as a network element in the sense of the present invention and which comprise a plurality of optical network units (ONU) that are connected to the optical line termination via separate optical transmission links thus forming e.g. a star topology.

The process of electronic dispersion compensation is applied to data signals from the data sources which are obtained within the OLT after a conversion of the received optical data signals from the optical to the electronic domain. Typical EDC algorithms include an adaptation process which comprises learning, i.e. modifying adaptation parameters in accordance with characteristics of the received data signals. Thereby, dispersion effects of transmitted data signals may be compensated within the OLT.

However, since the traffic from the ONU to the OLT in many cases comprises a burst characteristic, the conventional adaptation algorithms do not work properly. A main disadvantage of the known EDC strategies in combination with burst traffic is based on the fact that with higher data rates such as 10 Gb/s or above, the total length of data bursts from the data sources, i.e. ONUs, to the network element/OLT is too short for a proper adaptation by means of the conventional EDC processing running within the OLT. Consequently, the prior art systems cannot perform an optimal electronic dispersion compensation.

In many cases, after receiving a first data burst from a first ONU, the OLT will receive a further data burst which originates from a second ONU, wherein the second data burst most probably is - at least partly - transmitted via another optical transmission link and thus comprises different dispersion properties as compared to the first data burst. Therefore, even if an adaptation process of the conventional EDC has been initiated in response to receiving the first data burst of the first data source, within conventional systems, the adaptation parameters will be modified to account for the dispersion characteristics of the second data burst after that and will consequently not be optimal anymore for compensating data received from the first data source.

WO 2006/116747 discloses an electronic dispersion compensation (EDC) arrangement for a multi-channel optical receive which utilizes a time division technique to "share" a common adaptive algorithm block between a plurality of N separate channels.

US 2006/0093379 discloses an optical transceiver which includes a receiver having adaptive electronic dispersion compensation (EDC) circuitry on at least one optical channel. The adaptive electronic dispersion compensation circuitry provides diagnostics information to a host system.

Consequently, it is an object of the present invention to improve a method and system of the abovementioned type so as to enable a more flexible and efficient electronic dispersion compensation.

According to the present invention, this object is achieved by a method according to claim 1 and a network element according to claim 13.

The inventive usage of a plurality of sets of adaptation parameters enables to learn respective dispersion compensation parameters depending on a transmission link that is currently being used for transmitting signals from a data source to the network element. Consequently, by appropriately choosing the set of adaptation parameters which is currently used for the process of electronic dispersion compensation within the network element, a situation can be avoided in which one single set of adaptation parameters is continuously modified so as to enable compensation for several different optical transmission links and the dispersion imparted thereby, respectively. Instead, the inventive solution enables to choose a specific set of adaptation parameters for a specific data source and transmission link corresponding to said source. That is, the adaptation parameters of this specific set of adaptation parameters can optimally be tuned with respect to the individual dispersion effects induced by the respective optical transmission link. These parameters need not account for dispersion effects induced by further transmission links. Therefore, an optimal dispersion compensation is enabled within the receiving network element.

According to an advantageous embodiment of the present invention, timeslots are assigned to said data sources for transmitting data to the network element, and a set of adaptation parameters currently used for EDC processing within the network element is selected depending on the timeslots. Thereby, it is advantageously ensured that each data signal originating from a specific data source having an own time slot is processed with the correct set of adaptation parameters thus yielding an optimal dispersion compensation.

A further advantageous aspect of the invention proposes to assign a free timeslot and/or a new set of adaptation parameters to a new data source, e.g. an optical network unit which has not previously been involved with an optical data communication with the network element.

According to a further advantageous embodiment of the present invention, a set of adaptation parameters is initialised with predetermined default values. These predetermined default values may e.g. be chosen so as to at least enable a basic dispersion compensation, which may e.g. be achieved by choosing such default values which correspond to standard dispersion properties of the used optical transmission links. The standard dispersion properties may e.g. be derived from tests and/or simulations and/or physical properties (length, type) of the respective transmission link as far as they are available.

According to the present invention, a set of adaptation parameters, particularly for a new data source, may be initialised depending on a set of adaptation parameters assigned to an existing data source.

Thereby, a further way is provided of ensuring an instant provisional dispersion compensation which may during the further operation of the network element be tuned to optimise the dispersion compensation according to the individual properties of the transmission link used with the new data source.

Another very advantageous embodiment of the present invention is characterized in that each data source is assigned a specific set of adaptation parameters, which enables an optimal overall dispersion compensation of the whole transmission system. In contrast thereto, it is also possible to provide a limited number of sets of adaptation parameters, wherein several network elements and their transmission links may be assigned to one such set of adaptation parameters to e.g. save memory resources for storing the adaptation parameters and processing effort.

Yet a further very advantageous embodiment of the present invention proposes that a data source transmits a training sequence, which preferably comprises a signal known by the network element, to said network element. The training sequence may comprise a specific, predetermined bit sequence that enables an efficient learning of adaptation parameters and thus reduces the operation time during which a non-optimal dispersion compensation is provided.

Preferably, the training sequence is transmitted prior to transmitting regular data such as user data or the like.

It is also possible to use a reduced bit rate for transmitting the training sequence or to use different bit rates for the training sequence to improve the process of learning the adaptation parameters within the network element. Instead of employing a reduced bit rate, it is also possible to use special meta-symbols for data transmission during the training sequence, e.g. meta-symbols which consist of a sequence of two or more regular symbols having the same logical value. Such a meta-symbol may e.g. be formed by transmitting eight regular symbols of the value "1" continuously.

According to a further very advantageous embodiment of the present invention, said set of adaptation parameters comprises parameters of an equalizer of EDC processing means, particularly weighting factors and/or correlator values and/or integrator values and/or further parameters that depend on the properties of data signals received by the network element or the properties of a corresponding transmission channel, respectively, and that are modified during the process of learning.

A further very advantageous embodiment of the present invention proposes to selectively open and/or close a feedback loop of an EDC processor which enables to flexibly provide feedback data to the EDC processing and to thereby alter the characteristics of the feedback processing.

Although the method according to the present invention also works with continuous mode traffic, its major advantages enable an efficient learning of adaptation parameters in configurations comprising burst mode traffic.

Further solutions to the object of the present invention are given by a network element according to claim 13 and an optical transmission system according to claim 16.

Advantageous embodiments and variants of the present invention are given by the dependent claims.

Further advantages, embodiments and details of the present invention are given in the following detailed description with reference to the drawings in which:
- Figure 1: depicts a first embodiment of the inventive optical transmission system,
- Figure 2: depicts a further embodiment of the present invention,
- Figure 3: depicts a third embodiment of the present invention,
- Figure 4: depicts a simplified flow chart of a first embodiment of the inventive method,
- Figure 5: depicts a simplified flow chart of a second embodiment of the inventive method, and
- Figure 6: depicts a further embodiment of the present invention.

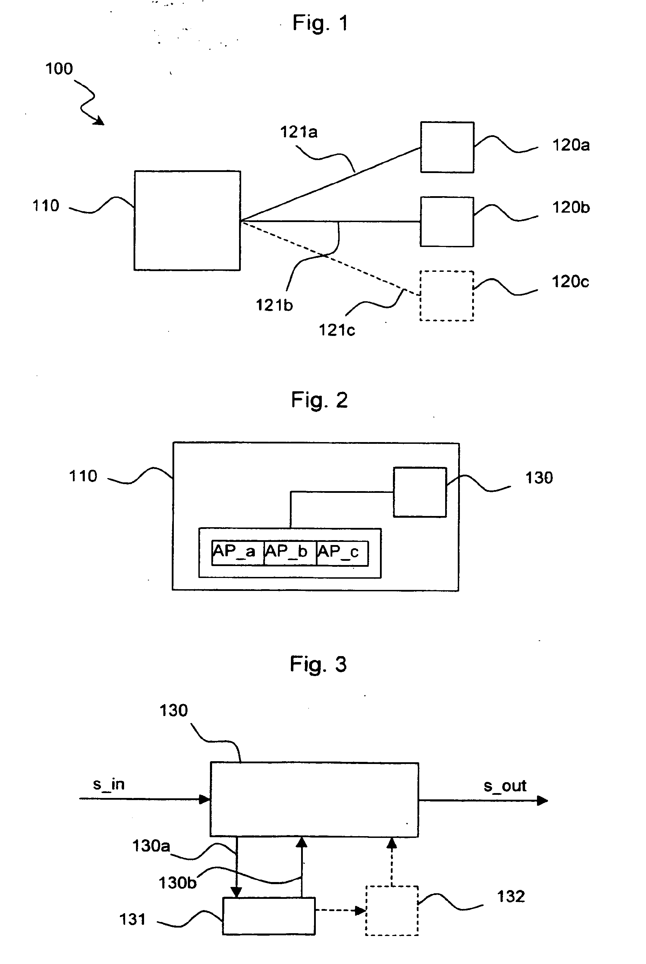

Figure 1 depicts a first embodiment of the inventive optical transmission system 100 which is e.g. part of an optical access system. The inventive optical transmission system 100 comprises a network element 110 which has the role of an optical line termination (OLT) that is in communication with a plurality of data sources 120a, 120b, 120c that are in the further description referred to as optical network units (ONU).

The optical network units 120a, 120b, 120c are connected with the optical line termination 110 via distinct optical transmission links 121a, 121b, 121c as depicted by Figure 1.

In order to compensate dispersion effects that occur during the transmission of data signals from the ONUs 120a, 120b, 120c to the OLT 110, EDC processing means 130 as depicted by Figure 2 are provided within the OLT 110 to perform a process of electronic dispersion compensation with respect to the data signals from the ONUs 120a, 120b, 120c.

The EDC processing means 130 are provided with an electric input signal s_in as depicted by Figure 3, that is obtained by transforming the optical data signals transmitted to the OLT 110 via the optical transmission links 121a, 121b, 121c into an electrical signal.

The process of electronic dispersion compensation performed by the EDC processing means 130 compensates for dispersion effects resulting from the optical data transmission and yields an electrical output signal s_out (Figure 3) that may be further processed and finally be converted to an optical signal again.

According to the present invention, a plurality of different sets AP_a, AP_b, AP_c of adaptation parameters (Figure 2) is provided within the OLT 110. Preferably, each set AP_a, AP_b, AP_c of adaptation parameters is assigned to a specific ONU 120a, 120b, 120c and its respective optical transmission link 121a, 121b, 121c.

That is, in contrast to prior art systems, the EDC processing means of which only comprise a single set of adaptation parameters which has to be used for EDC processing of data signals of all ONUs 120a, 120b, 120c collectively, the inventive system and method enable to maintain a single set AP_a, AP_b, AP_c of adaptation parameters for each single ONU 120a, 120b, 120c thus avoiding the disadvantage that adaptation parameters cannot be optimally learned since they are shared between different transmission links 121a, 121b, 121c that most usually have different dispersion characteristics.

Advantageously the present invention proposes to individually perform a step of EDC processing for each ONU 120a, 120b, 120c, wherein the respective ONU-individual set AP_a, AP_b, AP_c of adaptation parameters is chosen as a basis for EDC processing thus guaranteeing for optimal EDC processing.

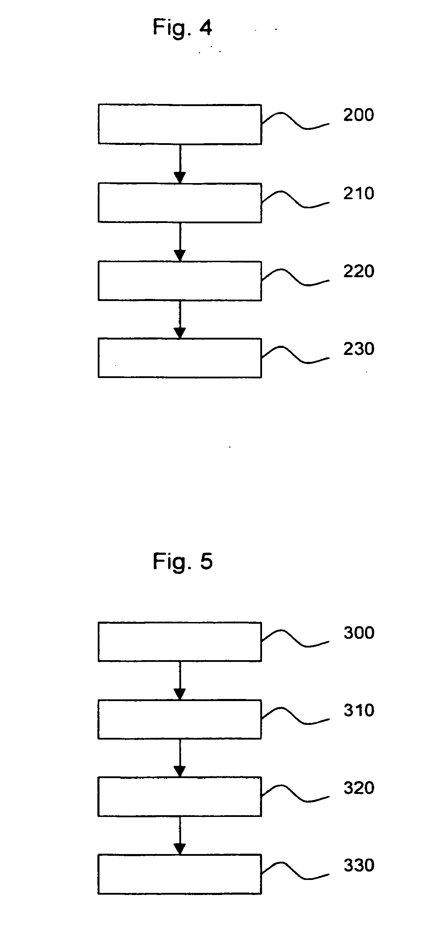

A first embodiment of the method according to the present invention is now described with respect to the flow chart of Figure 4.

Firstly, at step 200, the EDC processing means 130 (Figure 2) choose a first set AP_a of adaptation parameters which are assigned to the first ONU 120a (Figure 1). This first set AP_a of adaptation parameters has previously been exclusively used for EDC processing of data signals received from the first ONU 120a and is therefore optimised for dispersion compensation regarding the ONU 120a and its transmission link 121a. "Choosing" in the present case means that the respective adaptation parameters AP_a are applied to the inventive EDC processing means 130 so as to perform EDC processing in accordance with these parameters AP_a. The step of "choosing" may hence also comprise storing other parameters that have been used before, loading the relevant parameters AP_a from a memory unit or the like to the EDC processing means 130, and the like, whatever steps are necessary to cause the inventive EDC processing means 130 to perform EDC processing based on the chosen parameters AP_a.

After that, at step 210, the ONU 120a (Figure 1) transmits data via the optical transmission link 121a to the OLT 110, which may advantageously be performed in a predetermined time slot reserved for the ONU 120a. Correspondingly, since the EDC processing is performed on the basis of the first set AP_a of adaptation parameters (cf. step 200), an optimal dispersion compensation is guaranteed.

After the data transmission from the first ONU 120a, the EDC processing means 130 load a second set AP_b of adaptation parameters which is assigned to the second ONU 120b, confer step 220 of Figure 4, because the following time slot is reserved for a data transmission from the second ONU 120b.

Subsequently, at step 230, the ONU 120b transmits data via its transmission link 121b to the OLT 110, and again, an optimal ONU-individual electronic dispersion compensation is guaranteed, because the EDC processing means 130 operate during said step 230 on the basis of adaptation parameters AP_b which are exclusively assigned to the second ONU 120b currently transmitting data and which are therefore optimised to the second ONU 120b.

As already alluded to above, a preferred embodiment of the present invention proposes to assign different timeslots to the ONUs 120a, 120b, 120c for transmitting their data to the OLT 110. Accordingly, for the data transmission and the processing of the different timeslots, the respective set AP_a, AP_b, AP_c of adaptation parameters may be loaded by the EDC processing means 130.

Figure 3 depicts a detailed representation of the inventive EDC processing means 130. As already explained above, the EDC processing means 130 are provided at their input with an electrical input signal s_in, and after performing the EDC processing, the EDC processing means 130 yield an electrical output signal s_out with reduced or completely compensated dispersion effects.

The basic EDC processing performed within the EDC processing means 130 is per se known and therefore not further detailed in the present description. However, those parts of the EDC processing which are improved by the present invention are explained in detail below.

Figure 3 depicts a functional block 131 which represents adaptation means that obtain adaptation parameters depending on the input signal s_in provided by the EDC processing means 130 and depending on further parameters which are related to the step of EDC processing. Generally, as is also known from prior art, a feedback loop between the EDC processing means 130 and the adaptation means 131 is established, which is symbolized in Figure 3 by the arrows 130a, 130b.

The arrow 130a indicates the abovementioned signals such as the input signal s_in and the further parameters of the EDC processing means 130 based on which the adaptation parameters are determined within the adaptation means 131. Once the adaptation parameters are determined, the adaptation means 131 output the adaptation parameters, confer the arrow 130b, to the EDC processing means 130 thereby influencing the process of EDC processing via the adaptation parameters. This feedback loop 130a, 130b is always closed within prior art systems.

One example for adaptation parameters are e.g. filter coefficients which describe the frequency characteristic of filter means implemented within the EDC processing means 130.

According to the present invention, in order to provide individual sets of adaptation parameters for different ONUs 120a, 120b, 120c, the inventive EDC processing means 130 comprises parameter selection means 132 which are configured to access the different sets of adaptation parameters AP_a, AP_b, AP_c as depicted by Figure 2. These adaptation parameters may have been determined as described above depending on the input signal 130a to the adaptation means 131.

The inventive parameter selection means 132 are - according to the present invention - controlled so as to load and thereby provide a distinct set AP_a, AP_b, AP_c of adaptation parameters to the EDC processing means 130 depending on the data source or ONU 120a, 120b, 120c, respectively, that is currently transmitting data to the OLT 110.

Consequently, according to the present invention, the feedback loop 130a, 130b is not permanently closed as within the prior art systems, but it is rather modified so as to be able to provide ONU-individual adaptation parameter sets AP_a, AP_b, AP_c to the EDC processing means 130.

If a new ONU 120c, which has previously not been in communication with the OLT 110, and which is therefore depicted by dashed lines within Figure 1, initiates communication with the OLT 110 for the first time, correspondingly, a new set AP_c of adaptation parameters may be provided by the EDC processing means 130 or generally by a control unit (not shown) provided within the OLT 110. The new set AP_c of adaptation parameters may advantageously be initialised to predetermined values which represent an optimal starting point for a further learning process in the course of electric dispersion compensation within the EDC processing means 130.

It is also possible to provide an initialisation of a new set AP_c of adaptation parameters depending on an existing set AP_a, AP_b of adaptation parameters which may be more advantageous in such cases in which the transmission links 121a, 121b, 121c have similar dispersion characteristics.

Figure 5 depicts a further embodiment of the method according to the present invention.

In a first step 300, data is transmitted from the first ONU 120a to the OLT 110 within a burst transmission. After said burst transmission 300, adaptation parameters which are currently used by the EDC processing means 130 and which have been modified during the burst transmission 300 by the adaptation means 131 (Figure 3) are stored within a memory unit of the OLT 110 for a further use that e.g. corresponds with a future time slot determined for a next burst transmission with ONU 120a.

The process of storing is indicated by step 310 of the flow chart according to Figure 5.

In the next step 320 of the inventive method, a further set of adaptation parameters, which is assigned to the second ONU 120b, is retrieved from the memory unit and provided to the EDC processing means 130, because in the following step 330, a burst transmission is performed from the second ONU 120b to the OLT 110.

Although it is particularly advantageous if every ONU 120a, 120b, 120c is provided with an own distinct set AP_a, AP_b, AP_c of adaptation parameters, it is also possible to provide fewer sets of adaptation parameters, wherein e.g. one set of adaptation parameters is used for the first and second ONU 120a, 120b and wherein a further set of adaptation parameters is used for the third ONU 120c.

This embodiment of the present invention saves memory within the memory unit and may be sufficient for an optimal EDC processing in such cases where the dispersion characteristics of the first and second ONUs 120a, 120b and their respective optical transmission links 121a, 121b are similar to each other, whereas the dispersion characteristics of the further ONU 120c and its optical transmission link 121c is substantially different from those of the first and second ONUs 120a, 120b.

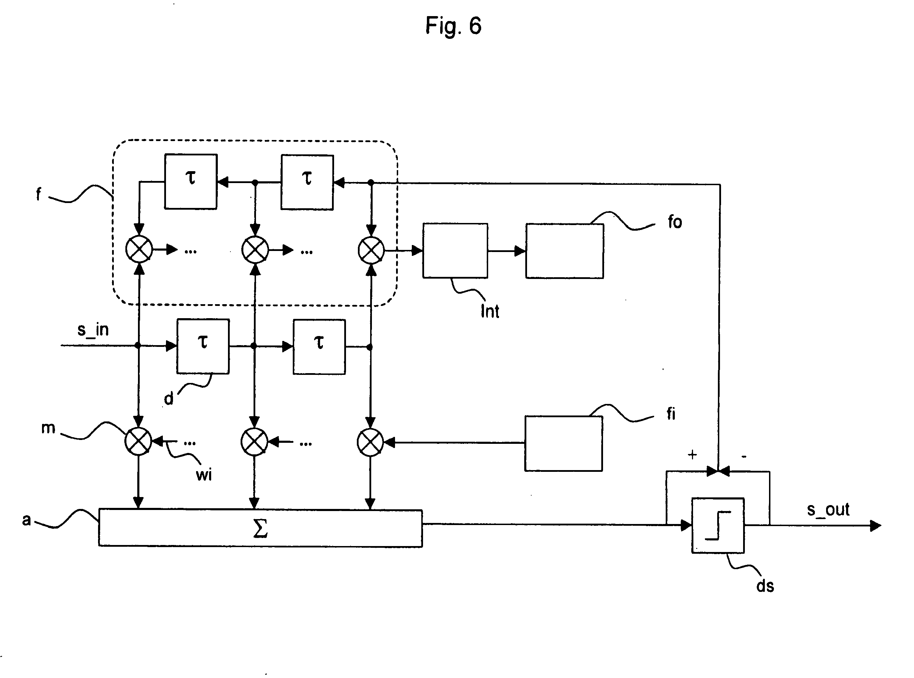

Figure 6 depicts an embodiment of the present invention which is based on an analog equalizer structure used for dispersion compensation.

The analog equalizer structure receives at its input the electrical input signal s_in and outputs at its output the dispersion compensated electrical output signal s_out.

The block designated with the reference numeral f defines correlation means which - in a per se known manner - derive one or more adaptation parameters from the input signal s_in by utilizing one or more integrators Int. The values stored in the integrator(s) Int can also be considered as a feedback output value that is provided to control means of the OLT 110, which is symbolized by the block denoted with the reference numeral fo. In the context of the correlation means f, the adaptation parameters describe a degree of correlation between the input signal s_in and a (multiply) delayed output signal obtained from the decider stage ds.

Equalisation of the input signal s_in itself is performed by a plurality of delay elements d and multipliers m which provide delayed instances of the input signal s_in, that are multiplied by corresponding weighting factors wi by means of the multipliers m. The weighting factors wi may advantageously be provided from a so-called feedback input fi which may correspond to or at least depend on the values derived from the integrator Int and the feedback output fo explained above.

The delayed and weighted components of the input signal s_in are added by an adder a which yields at its output a dispersion compensated signal that is finally forwarded to the decider stage ds that generates a digital signal provided as the output signal s_out.

A difference between the digital output signal s_out and the dispersion compensated signal obtained at the output of the adder a is fed back to the correlation means f and thus influences the future generation of adaptation parameters in the "feedback out" section fo.

According to the present invention, the "feedback in" section fi may selectively be provided with different sets AP_a, AP_b, AP_c of adaptation parameters depending on the ONUs 120a, 120b, 120c that currently transmit data to the OLT 110. Likewise, the data obtained at the feedback output fo may be stored for later use and for modifying existing adaptation parameters.

Alternatively, the feedback loop may be closed by directly forwarding the feedback values provided within the function block fo to the feedback in function block fi. This variant is particularly advantageous, if there is no need for ONU-individual dispersion compensation.

The inventive principle is also applicable to fully digital EDC processing.

The inventive sets AP_a, AP_b, AP_c of adaptation parameters may advantageously comprise parameters of an equalizer of the EDC processing means 130, particularly weighting factors wi (Figure 6), and/or correlator values and/or integrator values Int and/or further parameters that depend on the properties of received data signals or the properties of a corresponding transmission channel 121a, 121b, 121c and its dispersion characteristics, respectively.

When loading a new set of adaptation parameters, local memory elements such as the integrators Int (Figure 6) of the correlation means f are advantageously reset or reinitialised with previously stored values, e.g. from a preceding transmission cycle using the same adaptation parameters.

EDC processing according to the present invention may also be employed in other network elements than the OLT 110.

Yet a further very advantageous embodiment of the present invention proposes that a ONU 120a transmits a training sequence, which preferably comprises a signal known by the OLT 110. The training sequence may comprise a specific, predetermined bit sequence that enables an efficient learning of adaptation parameters and thus reduces the operation time during which a non-optimal dispersion compensation is provided. Preferably, the training sequence is transmitted prior to transmitting regular data such as user data or the like.

It is also possible to use a reduced bit rate for transmitting the training sequence or to use different bit rates for the training sequence to improve the process of learning the adaptation parameters within the OLT 110.

The inventive method enables a precise and individual electronic dispersion compensation which is particularly suited for use within high bit rate optical transmission systems.

The EDC processing means 130 may also be designed as digital system comprising a digital equalizer and a channel estimator. The digital equalizer of such digital EDC processing means may selectively be provided with different sets of adaptation parameters to realize the inventive idea. The adaptation parameters may e.g. be determined depending on an operation of the channel estimator of the digital EDC processing means.

## Claims

1. Method of operating an optical transmission system (100), wherein a network element (110) receives data from two or more data sources (120a, 120b), wherein a process of electronic dispersion compensation, EDC, is applied to data signals received by said network element (110) from said data sources (120a, 120b), and wherein adaptation parameters, which control the process of electronic dispersion compensation, are learned, particularly during processing of said data signals within the network element (110), wherein at least two different sets (AP_a, AP_b, AP_c) of adaptation parameters are provided, and wherein said sets (AP_a, AP_b, AP_c) of adaptation parameters are assigned to different data sources (120a, 120b), **characterized by** initializing a set (AP_a, AP_b, AP c) of adaptation parameters, particularly for a new data source (120c), depending on a set of adaptation parameters assigned to an existing data source (120a, 120b).

2. Method according to claim 1, **characterized in that** time slots are assigned to said data sources (120a, 120b) for transmitting data to the network element (110), and **in that** a set (AP_a, AP_b, AP_c) of adaptation parameters currently used for EDC processing within the network element (110) is selected depending on the time slots.

3. Method according to claim 2, **characterized by** assigning a free time slot and/or a new set (AP_c) of adaptation parameters to a new data source (120c).

4. Method according to one of the preceding claims, **characterized by** initializing a set (AP_a, AP_b, AP_c) of adaptation parameters with predetermined default values.

5. Method according to one of the preceding claims, **characterized in that** each data source (120a, 120b, 120c) is assigned a specific set (AP_a, AP_b, AP_c) of adaptation parameters.

6. Method according to one of the preceding claims, **characterized in that** a data source (120c) transmits a training sequence, which preferably comprises a signal known by the network element (110), to said network element (110).

7. Method according to claim 6, **characterized in that** said training sequence is transmitted prior to transmitting regular data, particularly user data.

8. Method according to one of the claims 6 to 7, **characterized in that** said training sequence is transmitted periodically.

9. Method according to one of the claims 6 to 8, **characterized in that** a reduced and/or different bit rates is/are used for transmitting said training sequence.

10. Method according to one of the preceding claims, **characterized in that** said set (AP_a, AP_b, AP_c) of adaptation parameters comprises parameters of an equalizer of EDC processing means (130), particularly weighting factors, and/or correlator values and/or integrator values and/or further parameters that depend on the properties of data signals received by the network element (110) or the properties of a corresponding transmission channel (121a, 121b, 121c), respectively.

11. Method according to one of the preceding claims, **characterized in that** a feedback loop of an EDC processor is selectively opened and/or closed.

12. Method according to one of the preceding claims, **characterized by** transmitting data from said data sources (120a, 120b) to said network element (110) in a burst mode.

13. Network element (110) for an optical transmission system (100), wherein said network element (110) is configured to receive data from two or more data sources 120a, 120b), receive data from two or more data source (120a, 120b), wherein said network element (110) comprises EDC processing means (130) for applying a process of electronic dispersion compensation, EDC, to data signals received by said network element (110) from said data source (120a, 120b), said EDC processing means (130) being configured to learn adaptation parameters which control the process of electronic dispersion compensation, particularly during processing of said data signals within the network element (110) wherein at least two different sets (AP_a, AP_b, AP_c) of adaptation parameters are provided, and wherein said EDC processing means (130) are configured to assign said sets (AP_a, AP_b, AP_c) of adaptation parameters to different data sources (120a, 120b), **characterized in that** said network element (110) is configured to initialize a set (AP_a, AP b, AP_c) of adaptation parameters particularly for a new data source (120c), depending on a set of adaptation parameters assigned to an existing data source (120a, 120b).

14. Network element (110) according to claim 13,_ **characterized by** being configured to perform the method according to one of the claims 1 to 12,

15. Network element (110) according to one of the claims 13 to 14, **characterized by** digital EDC processing means (130).

16. Optical transmission system (100) comprising a network element (110) according to one of the claims 13 to 15.

## Patentansprüche

1. Verfahren für den Betrieb eines optischen Übertragungssystems (100), wobei ein Netzwerkelement (110) Daten von zwei oder mehr Datenquellen (120a, 120b) empfängt, wobei der Vorgang einer elektronischen Dispersionskompensation, EDC, auf an dem besagten Netzwerkelement (110) von den besagten Datenquellen (120a, 120b) empfangene Datensignale angewendet wird, und wobei Anpassungsparameter, welche den Vorgang der elektronischen Dispersionskompensation steuern, gelernt werden, insbesondere während der Verarbeitung der besagten Datensignale innerhalb des Netzwerkelements (110), wobei mindestens zwei unterschiedliche Sätze (AP_a, AP_b, AP_c) von Anpassungsparametern bereitgestellt werden, und wobei die besagten Sätze (AP_a, AP_b, AP_c) von Anpassungsparametern unterschiedlichen Datenquellen (120a, 120b) zugewiesen werden, **gekennzeichnet durch** das Initialisieren eines Satzes (AP_a. AP_b, AP_c) von Anpassungsparametern, insbesondere für eine neue Datenquelle (120c), in Abhängigkeit von einem einer bestehenden Datenquelle (120a, 120b) zugewiesenen Satz von Anpassungsparametern.

2. Verfahren nach Anspruch 1, **dadurch gekennzeichnet, dass** den besagten Datenquellen (120a, 120b) Zeitschlitze für die Übertragung von Daten an das Netzwerkelement (110) zugewiesen werden, und dass ein Satz (AP_a, AP_b, AP_c) von momentan für die EDC-Verarbeitung innerhalb des Netzwerks (110) verwendeten Anpassungsparametern in Abhängigkeit von den Zeitschlitzen ausgewählt wird.

3. Verfahren nach Anspruch 2, **gekennzeichnet durch** das Zuweisen eines freien Zeitschlitzes und/oder eines neuen Satzes (AP_c) von Anpassungsparametern an eine neue Datenquelle (120c).

4. Verfahren nach einem der vorstehenden Ansprüche, **gekennzeichnet durch** das Initialisieren eines Satzes (AP_a, AP_b, AP_c) von Anpassungsparametern mit vorbestimmten Vorgabewerten.

5. Verfahren nach einem der vorstehenden Ansprüche, **dadurch gekennzeichnet, dass** jeder Datenquelle (120a, 120b, 120c) ein spezifischer Satz (AP_a, AP_b, AP_c) von Anpassungsparametern zugewiesen wird.

6. Verfahren nach einem der vorstehenden Ansprüche, **dadurch gekennzeichnet, dass** eine Datenquelle (120c) eine Trainingssequenz, welche vorzugsweise ein dem Netzwerkelement (110) bekanntes Signal enthält, an das besagte Netzwerkelement (110) überträgt.

7. Verfahren nach Anspruch 6, **dadurch gekennzeichnet, dass** die besagte Trainingssequenz vor der Übertragung von regulären Daten, insbesondere von Nutzerdaten, übertragen wird.

8. Verfahren nach einem der Ansprüche 6 bis 7, **dadurch gekennzeichnet, dass** die besagte Trainingssequenz periodisch übertragen wird.

9. Verfahren nach einem der Ansprüche 6 bis 8, **dadurch gekennzeichnet, dass** eine reduzierte und/oder unterschiedliche Bitrate(n) für die Übertragung der besagten Trainingssequenz verwendet wird/werden.

10. Verfahren nach einem der vorstehenden Ansprüche, **dadurch gekennzeichnet, dass** der besagte Satz (AP_a, AP_b, AP_c) von Anpassungsparametern Parameter eines Entzerrers von EDC-Verarbeitungsmitteln (130), insbesondere Gewichtungsfaktoren, und/oder Korrelatorwerte und/oder Integratorwerte und/oder weitere Parameter, welche jeweils von den Eigenschaften der an dem Netzwerkelement (110) empfangenen Datensignale oder von den Eigenschaften eines entsprechenden Übertragungskanals (121a, 121b, 121c) abhängen, umfasst.

11. Verfahren nach einem der vorstehenden Ansprüche, **dadurch gekennzeichnet, dass** eine Rückkopplungsschleife eines EDC-Prozessors selektiv geöffnet und/oder geschlossen wird.

12. Verfahren nach einem der vorstehenden Ansprüche, **gekennzeichnet durch** das Übertragen von Daten von den besagten Datenquellen (120a, 120b) an das besagte Netzwerkelement (110) in einem Burst-Modus.

13. Netzwerkelement (110) für ein optisches Übertragungssystem (100), wobei das besagte Netzwerkelement (110) für den Empfang von Daten von zwei oder mehr Datenquellen (120a, 120B) konfiguriert ist, wobei das besagte Netzwerkelement (110) EDC-Verarbeitungsmittel (130) für das Anwenden des Vorgangs einer elektronischen Dispersionskompensation, EDC, auf an dem besagten Netzwerkelement (110) von den besagten Datenquellen (120a, 120b) empfangene Datensignale umfasst, wobei die besagten EDC-Verarbeitungsmittel (130) für das Lernen von Anpassungsparametern, welche den Vorgang der elektronischen Dispersionskompensation, insbesondere während der Verarbeitung der besagten Datensignale innerhalb des Netzwerkelements (110), steuern, konfiguriert sind, wobei mindestens zwei verschiedene Sätze (AP_a, AP_b, AP_c) von Anpassungsparametern bereitgestellt werden, und wobei die besagten EDC-Verarbeitungsmittel (130) für das Zuweisen der besagten Sätze (AP_a, AP_b, AP_c) von Anpassungsparametern an unterschiedliche Datenquellen (120a, 120b) konfiguriert sind, **dadurch gekennzeichnet, dass** das besagte Netzwerkelement (110) für das Initialisieren eines Satzes (AP_a, AP_b. AP_c) von Anpassungsparametern, insbesondere für eine neue Datenquelle (120c), in Abhängigkeit von einem einer bestehenden Datenquelle (120a, 120b) zugewiesenen Satz von Anpassungsparametern konfiguriert ist.

14. Netzwerkelement (110) nach Anspruch 13, **dadurch gekennzeichnet, dass** es für das Durchführen des Verfahrens nach einem der Ansprüche 1 bis 12 konfiguriert ist.

15. Netzwerkelement (110) nach einem der Ansprüche 13 bis 14, **gekennzeichnet durch** digitale EDC-Verarbeitungsmittel (130).

16. Optisches Übertragungssystem (100) mit einem Netzwerkelement (110) gemäß einem der Ansprüche 13 bis 15.

## Revendications

1. Procédé de fonctionnement d'un système de transmission optique (100), dans lequel un élément de réseau (110) reçoit des données provenant d'au moins deux sources de données (120a, 120b), dans lequel un processus de compensation de dispersion électronique, EDC, est appliqué à des signaux de données reçus par ledit élément de réseau (110) à partir desdites sources de données (120a, 120b), et dans lequel des paramètres d'adaptation, qui commandent le processus de compensation de dispersion électronique, sont appris, en particulier durant le traitement desdits signaux de données à l'intérieur de l'élément de réseau (110), dans lequel au moins deux ensembles (AP_a, AP_b, AP_c) différents de paramètres d'adaptation sont prévus, et dans lequel lesdits ensembles (AP_a, AP_b, AP_c) de paramètres d'adaptation sont attribués à des sources de données (120a, 120b) différentes, **caractérisé par** l'initialisation d'un ensemble (AP_a, AP_b, AP_c) de paramètres d'adaptation, en particulier pour une nouvelle source de données (120c), en fonction d'un ensemble de paramètres d'adaptation attribués à une source de données (120a, 120b) existante.

2. Procédé selon la revendication 1, **caractérisé en ce que** des créneaux temporels sont attribués auxdites sources de données (120a, 120b) pour transmettre des données à l'élément de réseau (110), et **en ce qu'**un ensemble (AP_a, AP_b, AP_c) de paramètres d'adaptation actuellement utilisé pour le traitement EDC à l'intérieur de l'élément de réseau (110) est choisi en fonction des créneaux temporels.

3. Procédé selon la revendication 2, **caractérisé par** l'attribution d'un créneau temporel libre et/ou d'un nouvel ensemble (AP_c) de paramètres d'adaptation à une nouvelle source de données (120c).

4. Procédé selon l'une des revendications précédentes, **caractérisé par** l'initialisation d'un ensemble (AP_a, AP_b, AP_c) de paramètres d'adaptation avec des valeurs par défaut prédéterminées.

5. Procédé selon l'une des revendications précédentes, **caractérisé en ce que** l'on attribue à chaque source de données (120a, 120b, 120c) un ensemble spécifique (AP_a, AP_b, AP_c) de paramètres d'adaptation.

6. Procédé selon l'une des revendications précédentes, **caractérisé en ce qu'**une source de données (120c) transmet une séquence d'apprentissage, qui comprend de préférence un signal connu par l'élément de réseau (110), audit élément de réseau (110).

7. Procédé selon la revendication 6, **caractérisé en ce que** ladite séquence d'apprentissage est transmise avant la transmission de données ordinaires, en particulier des données d'utilisateur.

8. Procédé selon l'une des revendications 6 et 7, **caractérisé en ce que** ladite séquence d'apprentissage est transmise périodiquement.

9. Procédé selon l'une des revendications 6 à 8, **caractérisé en ce qu'**un débit binaire réduit et/ou des débits binaires différents est/sont utilisés pour transmettre ladite séquence d'apprentissage.

10. Procédé selon l'une des revendications précédentes, **caractérisé en ce que** ledit ensemble (AP_a, AP_b, AP_c) de paramètres d'adaptation comprend des paramètres d'un égaliseur de moyens de traitement EDC (130), en particulier des facteurs de pondération, et/ou des valeurs de corrélation et/ou des valeurs d'intégration et/ou d'autres paramètres qui dépendent des propriétés des signaux de données reçus par l'élément de réseau (110) ou des propriétés d'un canal de transmission (121a, 121b, 121c) correspondant, respectivement.

11. Procédé selon l'une des revendications précédentes, **caractérisé en ce qu'**une boucle de rétroaction d'un processeur EDC est ouverte et/ou fermée de manière sélective.

12. Procédé selon l'une des revendications précédentes, **caractérisé par** la transmission de données à partir desdites sources de données (120a, 120b) vers ledit élément de réseau (110) dans un mode rafale.

13. Élément de réseau (110) pour un système de transmission optique (100), dans lequel ledit élément de réseau (110) est configuré pour recevoir des données provenant d'au moins deux sources de données (120a, 120b), dans lequel ledit élément de réseau (110) comprend des moyens de traitement EDC (130) pour appliquer un processus de compensation de dispersion électronique, EDC, à des signaux de données reçus par ledit élément de réseau (110) à partir desdites sources de données (120a, 120b), lesdits moyens de traitement EDC (130) étant configurés pour apprendre des paramètres d'adaptation qui commandent le processus de compensation de dispersion électronique, en particulier durant le traitement desdits signaux de données à l'intérieur de l'élément de réseau (110), dans lequel au moins deux ensembles (AP_a. AP_b. AP_c) différents de paramètres d'adaptation sont prévus, et dans lequel lesdits moyens de traitement EDC (130) sont configurés pour attribuer lesdits ensembles (AP_a, AP_b, AP_c) de paramètres d'adaptation à des sources de données (120a, 120b) différentes, **caractérisé en ce que** ledit élément de réseau (110) est configuré pour initialiser un ensemble (AP_a, AP_b, AP_c) de paramètres d'adaptation, en particulier pour une nouvelle source de données (120c), en fonction d'un ensemble de paramètres d'adaptation attribués à une source de données (120a, 120b) existante.

14. Élément de réseau (110) selon la revendication 13, **caractérisé en ce qu'**il est configuré pour exécuter le procédé selon l'une des revendications 1 à 12.

15. Élément de réseau (110) selon l'une des revendications 13 à 14, **caractérisé par** des moyens de traitement EDC numériques (130).

16. Système de transmission optique (100) comprenant un élément de réseau (110) selon l'une des revendications 13 à 15.
